# EUROPEAN PATENT SPECIFICATION

(11) **EP 4 725 098 B1**
(45) Date of publication and mention of the grant of the patent: **07.10.2026**
(21) Application number: 24737821.9
(22) Date of filing: 06.06.2024
(51) Int. Cl.: H02K 1/18, H02K 5/20, H02K 21/24, H02K 1/14

(54) **AXIAL FLUX ELECTRIC MACHINE PROVIDED WITH A STATOR ASSEMBLY AND METHOD OF MANUFACTURING A STATOR ASSEMBLY OF SAID AXIAL FLUX ELECTRIC MACHINE**
ELEKTRISCHE AXIALFLUSSMASCHINE MIT EINER STATORANORDNUNG UND VERFAHREN ZUR HERSTELLUNG EINER STATORANORDNUNG DIESER ELEKTRISCHEN AXIALFLUSSMASCHINE
MACHINE ÉLECTRIQUE À FLUX AXIAL POURVUE D'UN ENSEMBLE STATOR ET PROCÉDÉ DE FABRICATION D'UN ENSEMBLE STATOR DE LADITE MACHINE ÉLECTRIQUE À FLUX AXIAL

(30) Priority: 08.06.2023 IT 202300011754
(43) Date of publication of application: 15.04.2026
(73) Proprietor: Texa Dynamics S.R.L., 31050 Monastier di Treviso (TV) (IT)
(72) Inventor: VIANELLO, Bruno, 31050 Monastier di Treviso (TV) (IT); GIACOMETTI, Massimiliano, 31050 Monastier di Treviso (TV) (IT)
(74) Representative: Studio Torta S.p.A.
(86) International application number: PCT/IB2024/055538
(87) International publication number: WO 2024/252320

(56) References cited:
- EP-A1- 1 536 542
- EP-A1- 3 764 526
- WO-A1-2015/150545
- WO-A1-2017/077813
- WO-A1-2021/032236
- DE-A1- 102014 221 648
- US-A1- 2022 045 568
- US-A1- 2022 278 579
- US-A1- 2022 368 202

## Description

### Technical Field

This invention concerns a stator assembly and a method for producing said stator assembly.

In particular, this invention relates to an electric machine preferably corresponding to an axial flux electric motor that is provided with rotating, side, disc-shaped rotor elements, and a central stator assembly comprising a stator support and cooling body; to which the discussion below will refer without losing any generality thereby.

### Prior Art

It is known that, in recent years, so-called "axial flux" electric machines have had significant success, thanks both to the especially "flat" structure, which reduced its axial dimensions, and the technical performance achieved, which is very high, for example in terms of torque, power, and speed.

These peculiarities have ensured that axial flux electric machines are especially well adapted to being used with great versatility in a number of technical sectors, including, for example, vehicle propulsion systems and power generation systems.

In any case, known axial flux electric motors, as well as having great construction complexity that entails significant time and cost in terms of construction and assembly, have technical critical issues relating to stator cooling.

To this end, various solutions have been devised that, in any case, are not yet completely satisfactory. Document US 2022/278579 A1 discloses a stator assembly of the prior art.

### Description of the Invention

The purpose of this invention is, thus, to produce an axial flux electric machine of a stator assembly and provide a method for producing said stator assembly, which overcome the critical issues described above.

In particular, the purpose of this invention is to provide an axial flux electric machine that has a stator assembly that is able to increase the cooling capacity and can be produced with reduced costs and complexity.

In accordance with this purpose, according to this invention, an axial flux electric machine provided with a stator assembly is provided, as well as a method for producing said stator assembly according to what is defined in the corresponding independent claims and, preferably but not necessarily, in any of the dependent claims.

The claims describe preferred embodiments of this invention and form an integral part of this description.

### Brief Description of the Drawings

This invention will now be described with reference to the attached drawings that illustrate a non-limiting embodiment thereof, in which:
- Figure 1 is a perspective view of an axial flux electric machine produced according to this invention,
- Figure 2 is an exploded view of the axial flux electric machine shown in Figure 1,
- Figure 3 is an exploded view of the stator assembly included in the electric machine shown in Figure 2,
- Figure 4 is a perspective view of the stator support and cooling body included in the stator assembly shown in Figure 3,
- Figure 5 is an exploded view of the stator support and cooling body included in the stator assembly shown in Figure 4,
- Figure 6 is a perspective view of the stator support and cooling body shown in Figure 4, with parts removed for clarity,
- Figure 7 is an elevated lateral view of the stator support and cooling body shown in Figure 6, with parts removed for clarity,
- Figure 8 is a perspective view of the stator support and cooling body shown in Figure 4, with parts removed for clarity and parts on an enlarged scale,
- Figures 9, 10, 11, and 12 are four perspective views on an enlarged scale of portions of the electric motor shown in Figure 1 with parts removed for clarity,
- Figure 13 is an exploded view of the stator support and cooling body included in the stator assembly, produced according to another embodiment.

### Preferred Embodiments of the Invention

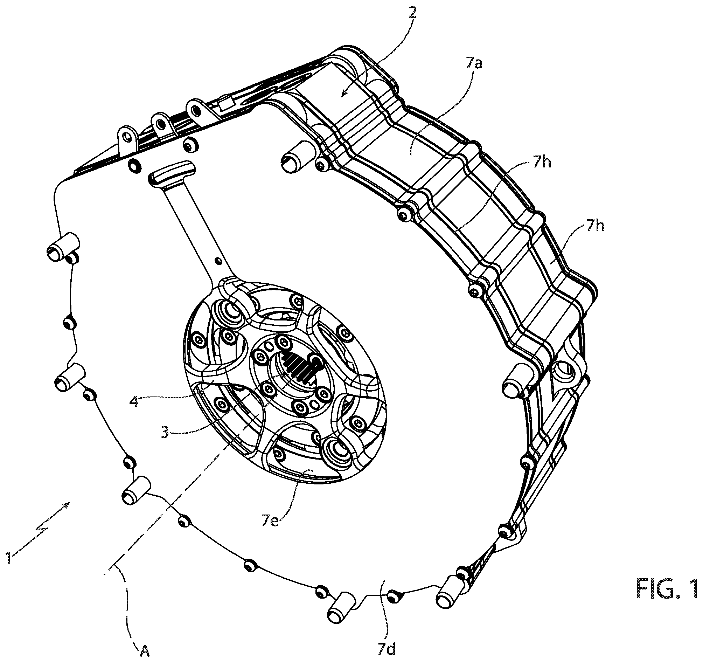

Figure 1 shows an electric machine that is the subject of this invention. Conveniently, the electric machine illustrated in Figure 1 is an axial flux electric machine. In the embodiment shown in Figure 1, the electric machine corresponds to an axial flux electric motor 1. It is, in any case, understood that this invention must not be considered as limited to electric motors, but is also applicable to embodiments in which the axial flux electric machine generates electric power operating as an electric generator.

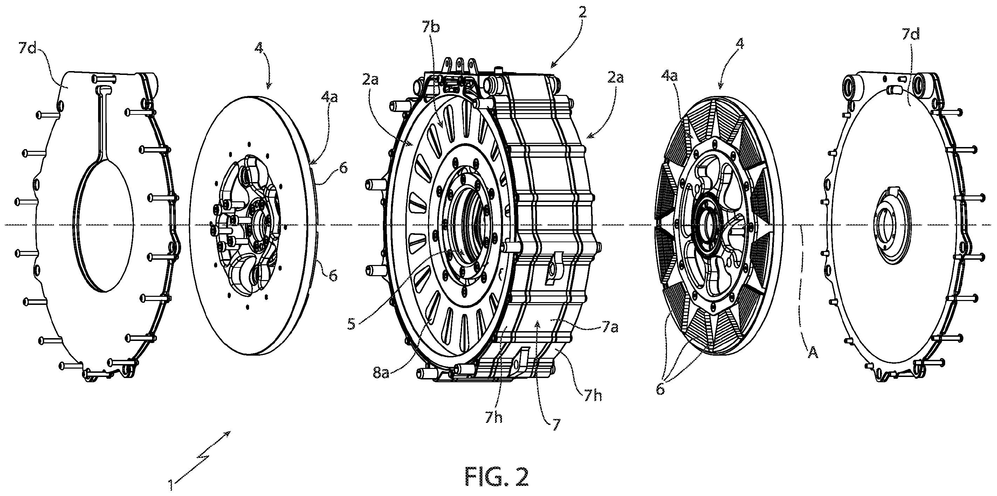

According to a preferred embodiment shown in Figures 1 and 2, the electric motor 1 comprises a stator assembly 2 that has, centrally, a reference axis A and a motor-shaft 3 that extends along the axis A and is designed, in use, to rotate around the axis.

According to the preferred embodiment shown in Figure 2, the electric motor 1 also comprises two disc-shaped rotors 4 that are arranged on axially opposite sides of the stator assembly 2 (along the axis A) and are designed, in use, to rotate around the axis A in relation to the stator assembly 2 to rotate the motor-shaft 3. It is understood that this invention must not be considered as limited to a pair of disc-shaped rotors 4, but according to a possible not illustrated embodiment, it may also be applied to an axial flux electric machine comprising a single, side disc-shaped rotor 4.

According to an embodiment represented in Figure 2, the stator assembly 2 has an approximately cylindrical external shape, a substantially annular cross-section orthogonal to the axis A, and has, centrally, a circular through opening 5 that extends along the axis A coaxially to that axis and is sized so as to be crossed by the motor-shaft 3.

The disc-shaped rotors 4 are substantially planar, are coaxial to the axis A, have substantially circular cross-section orthogonal to the axis A, and are arranged facing (adjacent to) the side walls 2a of the stator assembly 2 that are axially opposite each other along the axis A. In the example illustrated, the disc-shaped rotors 4 are centrally coupled to the motor-shaft 3 so as to rotate it and have an internal wall 4a that is substantially flat (planar) that faces a corresponding side wall 2a of the stator assembly 2 and multiple magnets 6. The magnets 6 may have a plate-like shape, be preferably permanent, and be arranged firmly on the internal wall 4a, preferably in positions equally angularly spaced apart, along a circumferential line coaxial to the axis A, conveniently with sequential, alternating polarity. The disc-shaped rotors 4 may preferably consist of plates made of ferromagnetic material, for example steel or the like, and have cooling through openings on the central, annular portion. The disc-shaped rotors 4 are designed, in use, to be rotated in relation to the stator assembly 2 (that remains standing) in response to the electromagnetic interaction between the magnets 6 and the axial magnetic fields generated by the stator assembly 2 according to electromagnetic principles that are known and, therefore, not described in detail.

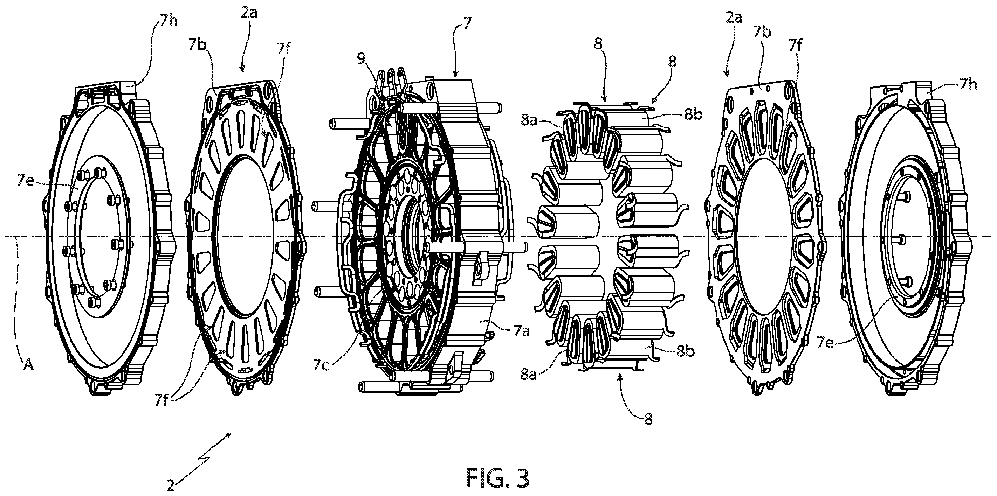

With reference to a preferred embodiment shown in Figures 2 and 3, the stator assembly 2 comprises a casing or frame 7, multiple stator elements 8, and a stator support and cooling body 9 that is arranged inside the frame 7 and is structured to house the stator elements 8 and cool them.

With reference to the embodiment shown in Figure 3, the stator elements 8 may each comprise an internal core 8a made of ferromagnetic material formed, for example, from a pack of stampings that extends along an axis substantially parallel to the axis A, an external electric coil 8b made of electrically conductive material (copper or the like) that is wound around the core 8a, preferably via the interposition of a tubular layer (not illustrated) of electrically insulating, preferably rigid, material that wraps around the core 8a. The stator element 8 may be conveniently made, for example, according to what is described in the international patent application WO2021064621 A1 of the Applicant, the content of which is understood to be completely incorporated here by way of reference.

According to a preferred embodiment shown in Figures 2 and 3, the frame 7 comprises an external wall 7a with a substantially cylindrical shape, arranged coaxial to the axis A, which has an internal face substantially in contact (abutting against) the external perimeter edge of the stator support and cooling body 9. The frame 7 also comprises two side, annular flanges 7b that are substantially flat (plate-shaped and planar) that are arranged coaxial to the axis A on axially opposite sides of the wall 7a and are connected, along the perimeter, to the wall 7a so as to form the two side walls 2a opposite the stator assembly 2a.

The frame 7 also comprises, centrally, an annular support plate 7c that is internally crossed by the motor-shaft 3 along the axis A and has an external, circular, perimeter edge that surrounds the internal perimeter of the stator support and cooling body 9 and an internal, circular, perimeter edge that is mechanically coupled to the motor-shaft 3, for example, via the interposition of a compass with bearings (not illustrated).

According to a preferred embodiment, the two flanges 7b are coupled to the wall 7a via mechanical fastening devices (screws, nuts), and to the annular plate 7c via a coupling ring 7e and mechanical fastening devices. The flat internal walls of the two flanges 7b delimit, with the internal, circular face of the wall 7a and with the external, perimeter edge of the central, annular plate 7c, an internal annular seat in which the stator support and cooling body 9 is fitted (housed).

According to a preferred embodiment, the two flanges 7b may be conveniently made of an electrically insulating polymer material (stiff plastic material) and have multiple through openings 7f that are equally angularly spaced apart around the axis A along a circumference and are shaped so as to each house an end portion of a core 8a projecting from the stator support and cooling body 9.

According to a preferred embodiment shown in Figures 1, 2, and 3, the electric motor 1 may also comprise two planar and circular side closing plates 7d that are respectively coupled with the two side flanges 7b via the interposition of annular partitions 7h so as to delimit, with the same, two internal chambers that are sized/structured to internally house the disc-shaped rotors 4.

With reference to the Figures from 4 to 8, the stator support and cooling body 9 has a substantially annular shape, approximately complementary to the annular shape of the internal seat of the frame 7. The stator support and cooling body 9 is provided with multiple stator seats 10 that are arranged around said axis A in positions adjacent to each other, extend along respective axes parallel to the axis A, and are structured so as to internally house the electromagnetic stator elements 8.

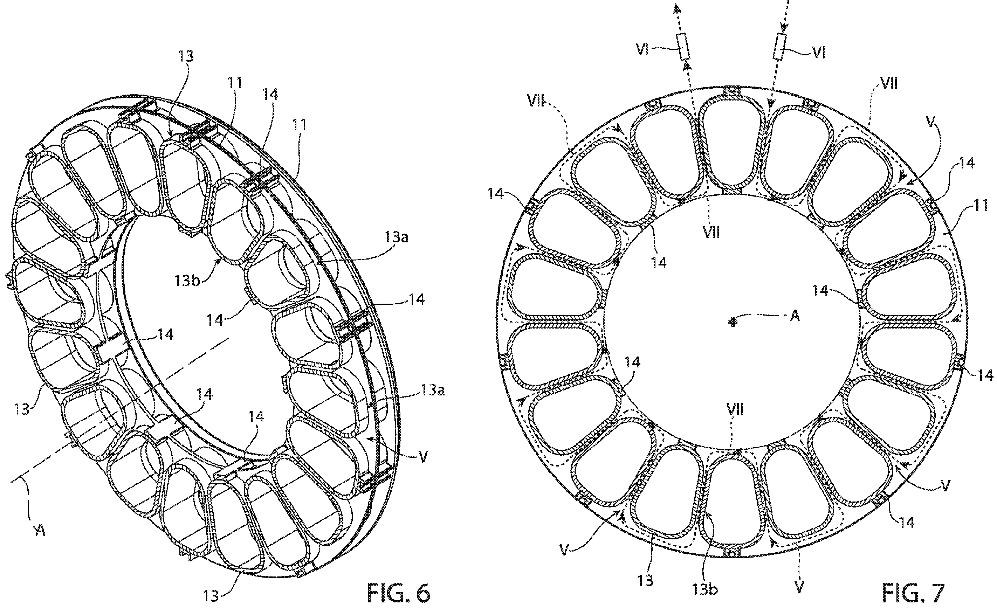

The stator support and cooling body 9 also comprises, at least one cooling circuit V (schematically shown in Figure 7) formed from internal channels VII that extend into the stator support and cooling body 9 (in the way described in detail below) so as to surround/brush the stator seats 10 on the opposite side to the stator elements 8. The cooling circuit V (shown in dashed lines in Figure 7) of the stator support and cooling body 9 is hydraulically connected to hydraulic connectors VI positioned outside the frame 7a of the electric motor 1 to receive, at the inlet, a cooling fluid and provide, at the outlet, the cooling fluid (heated). The cooling fluid can preferably be, conveniently, a liquid mixture based on water and glycol or the like.

The stator support and cooling body 9 comprises multiple annular plates 11 that are made of a first, electrically insulating material having thermal conductivity λ1. The annular plates 11 are substantially flat and are arranged coaxial to the axis A so as to lie on respective planes parallel to each other, at pre-established distances D in relation to the adjacent annular plate 11.

On the annular plates 11, there are multiple through openings 12 that are arranged circumferentially around the reference axis A, preferably equally angularly spaced apart from each other. In the example illustrated, the through openings 12 are shaped so as to have identical shapes and dimensions. In the example illustrated, the cross-section of each through opening 12 orthogonal to the axis A approximately corresponds to the external perimeter cross-section of the stator element orthogonal to the axis A. For example, each through opening 12 can have an approximately, inverted trapezoidal shape, with the smaller base turned towards the axis A, and wherein the sides are reciprocally connected with curved lines so as to have a closed, flat, curved cross-section.

Each through opening 12 of an annular plate 11 is coaxial to the axis of the through openings 12 formed on the other annular plates 11 so as to be aligned with the same.

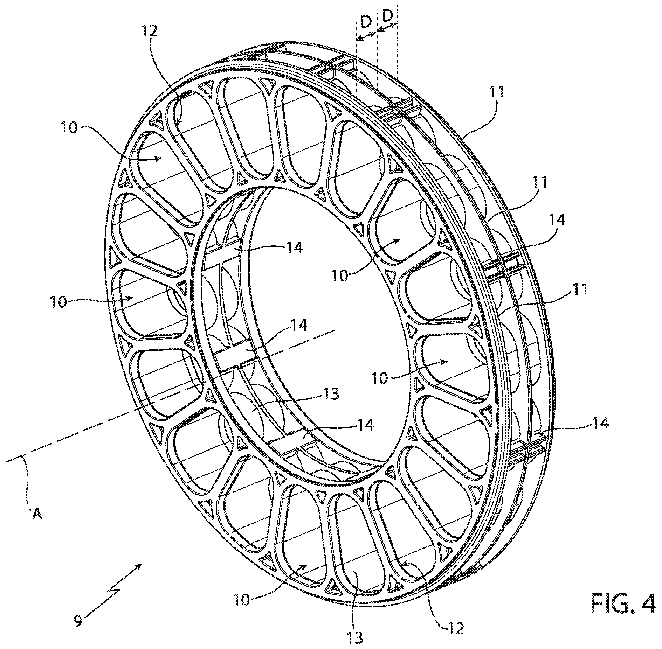

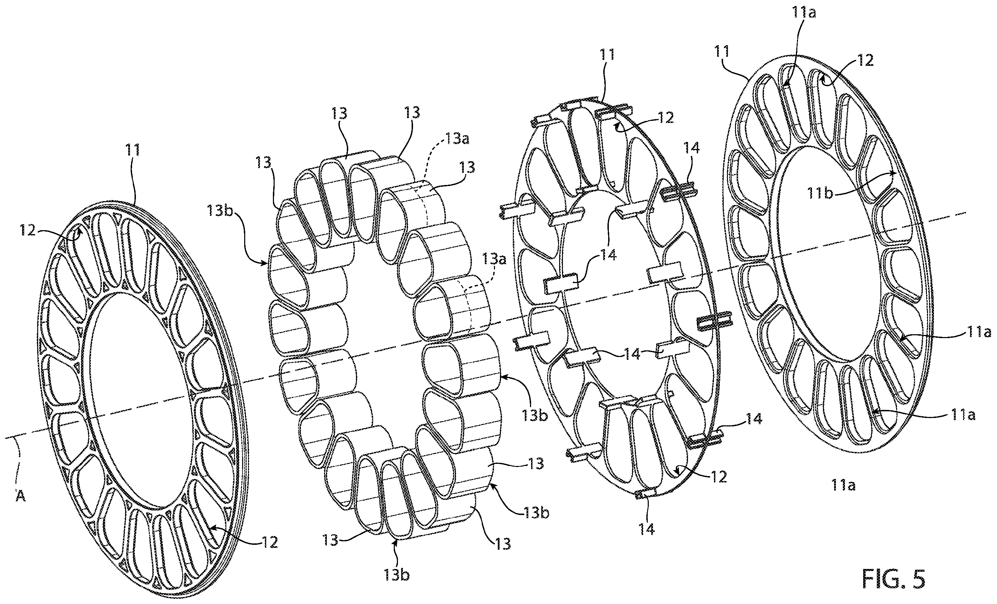

With reference to Figures 4 and 5, the stator support and cooling body 9 also comprises multiple tubular casings 13 that are firmly trapped/interposed between the annular plates 11 and are designed to house corresponding stator elements 8. The tubular casings 13 are arranged around the axis A circumferentially with the respective axes parallel to the axis A, in positions facing the through openings 12.

The tubular casings 13 are made of a second electrically insulating material having a second thermal conductivity λ2 that is greater than the first thermal conductivity λ1 of the first material (λ2> λ1). The second material is different to the first material. The second material is not the first material.

According to a convenient embodiment, the second material can be an electrically insulating material with very high thermal conductivity, while the first material can be an electrically insulating material with medium thermal conductivity.

Conveniently, the second material can be, for example, based on one or more ceramic materials. The Applicant found it is particularly convenient to use one or more of the following ceramic materials: aluminium nitride, alumina, or the like.

It remains understood that this invention is not limited to the above-mentioned ceramic materials, but can also involve other types of ceramic materials, such as, for example, boron nitride or the like.

According to a convenient embodiment, the first material can be a polymer (plastic) or the like.

A technical effect obtained using a stator support and cooling body 9 having a structure produced using components with electrically insulating materials and different thermal conductivities, i.e. formed from annular plates 11 and tubular casings 13 made with the first and, respectively, the second material is that of ensuring strong thermal exchange between the stator element 8 arranged in the tubular casing 13 and the cooling fluid that externally brushes the tubular casing 13.

An additional technical effect is that of reducing the overall costs of producing the stator support and cooling body 9, thanks to the use of the first material for producing the annular plates 11. The first material may, in fact, be a polymer material that, being widely used, has a much lower cost than the cost of the second material, used for the tubular casings 13.

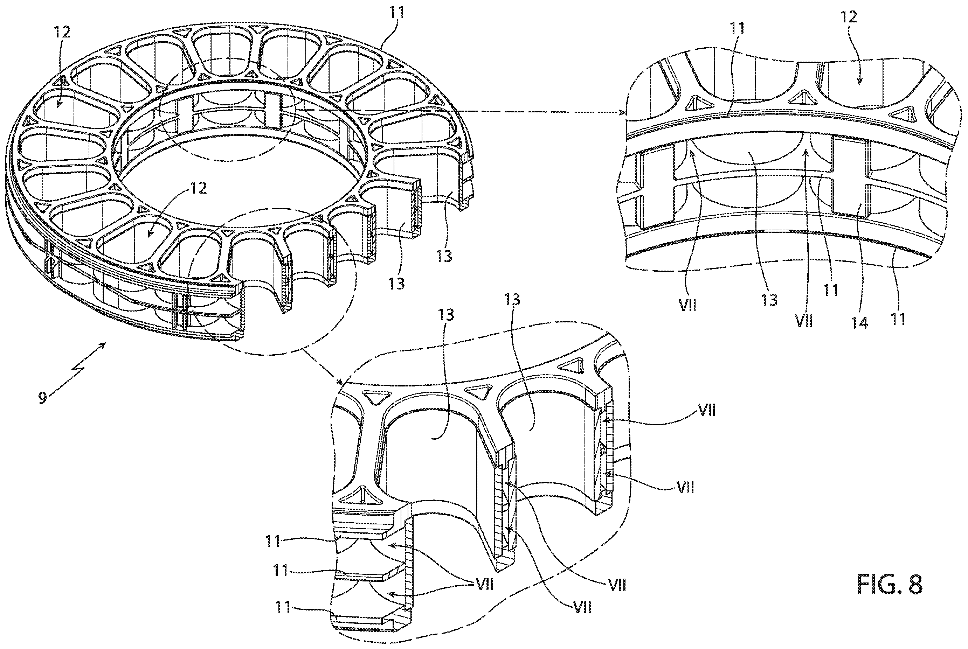

With reference to an embodiment shown in Figures 4-8, the tubular casings 13 have approximately the same cross-section (in relation to the axis A) of the through openings 12 and are sized so as to be fitted/inserted at least partially inside.

According to a preferred embodiment shown in Figures 4-8, the stator support and cooling body 9 comprises three annular plates 11. A first and second annular plate 11 are arranged laterally (along the axis A) while a third annular plate 11 is arranged centrally between the first and second annular plate 11 and lies on a midplane orthogonal to the axis A, approximately equally spaced apart from the first and second annular lateral plate 11 (distance: D).

The tubular casings 13 are inserted in the respective through openings 12 of the third annular plate 11 that supports them at the corresponding, axially central, annular portions 13a, and have annular edges 13b on the (axially opposite) terminal ends that are inserted at least partially in corresponding self-centring, circular indentations 11a that are formed on the internal walls 11b of the second and third annular plate 11 along the perimeter edges of the openings 12.

The tubular casings 13 and the annular plates 11 are rigidly coupled to each other so as to form a single body (single block). According to a possible embodiment, the tubular casings 13 and the annular plates 11 are conveniently, firmly coupled to each other via an adhesive material. Conveniently, the adhesive material can be made of at least one ceramic adhesive suitable for high temperatures. The Applicant has found, for example, the use of a ceramic adhesive called "Ceramabond" ^{®}, produced by AREMCO, advantageous.

Conveniently, the tubular casings 13 and the annular plates 11 are permanently coupled at the portions/edges of mutual contact. For example, the tubular casing 13 may have the annular portion 13a firmly (rigidly) coupled to the central annular plate 11 along the perimeter edge of the opening 12 and the edges 13b firmly (rigidly) coupled to the side annular plates 11, along the circular indentations 11a.

It is, in any case, understood that this invention is not limited to the coupling of the tubular casings 13 and the annular plates 11 using glue/adhesive material, but may be provided with, alternatively or additionally, other coupling/fastening procedures, such as, for example, fastening via a LASER system or the like.

In addition, or alternatively, it is also possible to couple the tubular casings 13 and the annular plates 11 using a process of locally melting polymer material on the ceramic body by heating the cores using an infrared heating system.

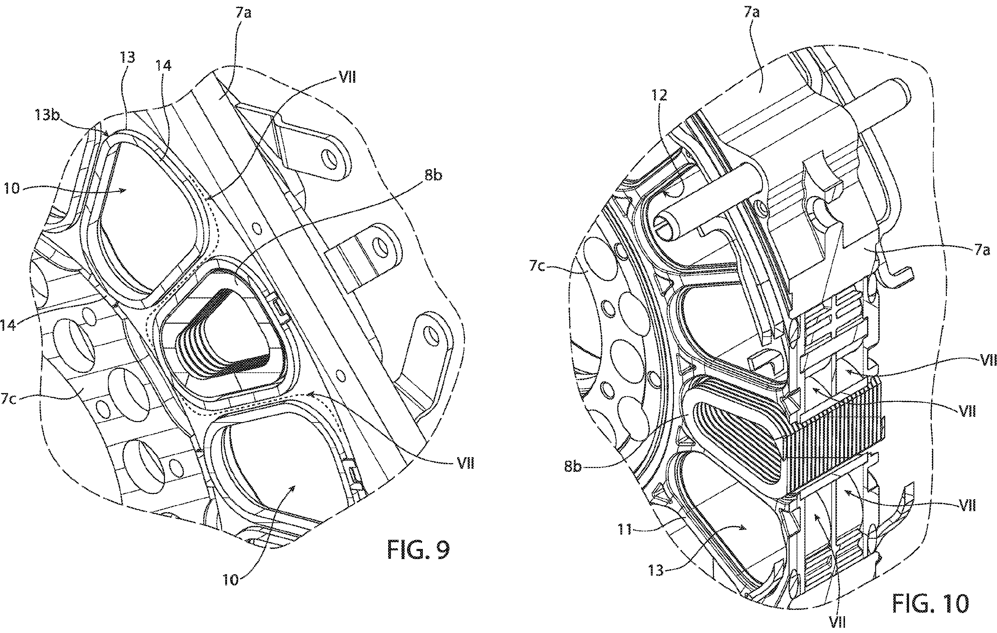

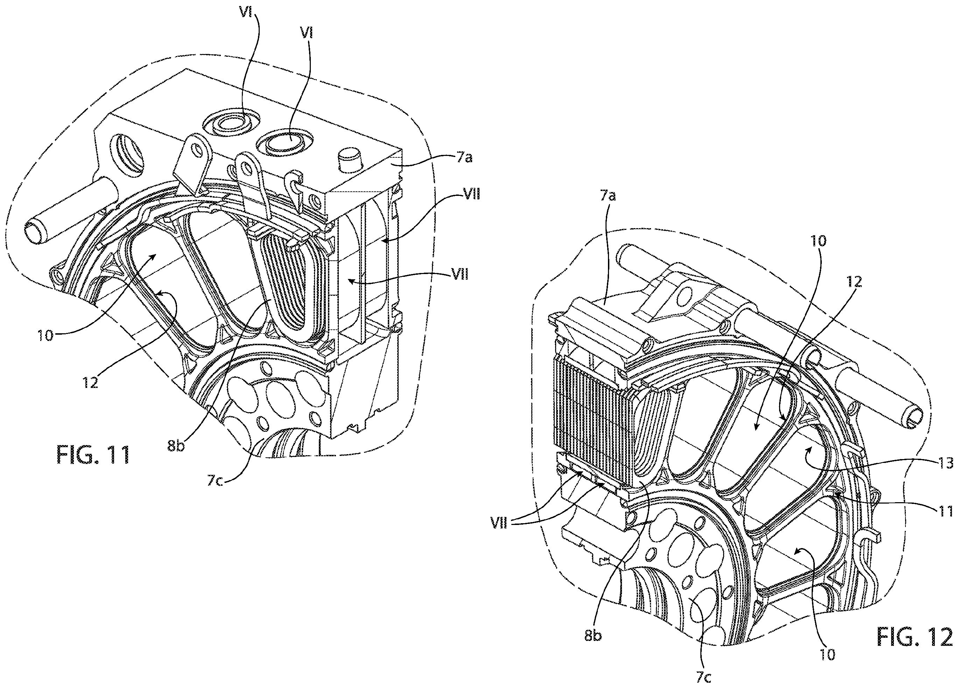

According to the preferred embodiment shown in Figures 6-12, the tubular casings 13 have internal annular surfaces housing the stator elements 8 and external annular surfaces, which delimit stator cooling channels VII of the cooling circuit V(Figure 7) with the internal surfaces of the annular plates 11, with the internal face of the wall 7a, and with the external, circular perimeter edge of the central annular plate 7c.

In particular, the internal face of the wall 7a is rigidly and hermetically coupled with the external perimeter edges of the annular plates 11 so as to internally delimit the external perimeter sections of the stator cooling channels VII that run along an external circumferential direction adjacent to the internal face of the wall 7a (Figure 7) inside the stator support and cooling body 9.

The external circular perimeter edge of the central annular plate 7c is rigidly and hermetically coupled to the internal perimeter edges of the annular plates 11 so as to delimit the internal perimeter sections of the stator cooling channels VII that run along an internal circumferential direction adjacent to the external, circular perimeter edge of the annular plate 7c (Figure 7) inside the stator support and cooling body 9.

The annular plates 11 and the radial portions of the external annular surfaces of the tubular casings 13 delimit radial sections of the stator cooling channels VII that hydraulically connect the internal perimeter sections with the external perimeter sections of the channels so as to form the cooling circuit V (Figure 7).

With reference to Figures 4-12, the annular plates 11 can be provided with partitions 14 along the external and internal perimeter edges that are arranged transverse to the support plane of the corresponding annular plate 11 and are designed to block the passage of the cooling fluid along the internal channel VII in the circumferential direction so as to deviate it along a radial section.

Conveniently, the partitions 14 of the external perimeter edges of the annular plates 11 may be coupled hermetically with the inner face of the wall 7a so as to prevent the fluid from escaping. Conveniently, the partitions 14 of the internal perimeter edges of the annular plates 11 may be coupled hermetically with the external, circular perimeter edge of the annular plate 7c so as to prevent the cooling fluid from escaping.

Conveniently, the external partitions 14 may be distributed around the axis A in angularly offset (alternating) positions in relation to the positioning angles of the internal partitions 14 around the axis A.

With reference to Figures 4-7, the three annular plates 11 delimit two cooling circuits V inside with the tubular casings 13, with the wall 7a, and with the annular plate 7c. The circuits are hermetically divided/separated by the central annular plate 11.

Conveniently, a first cooling circuit V (shown in Figure 7) incorporated for example between the first, side annular plate 11 and the third, central annular plate 11 may be structured so as to have a first, circular cooling direction around the axis A (clockwise in Figure 7). The second cooling circuit V incorporated for example between the second, side annular plate 11 and the third, central annular plate 11 may be structured so as to have, conveniently, a second, circular cooling direction around the axis A, preferably opposite the first direction (anticlockwise in Figure 7).

A method for producing the stator assembly 2 of the axial flux electric motor 1 will be described below.

It is understood that this invention is not limited to the method for producing the stator assembly 2 of the axial flux electric motor 1 but is also applicable to producing the stator assembly 2 of a machine corresponding to an axial flux electric generator 1.

The method comprises the step of preparing multiple annular plates 11 coaxially to the axis A, preparing multiple tubular casings 13, arranging the tubular casings 13 between each pair of annular plates 11, firmly coupling the tubular casings 13 with the annular plates 11 so as to obtain a monolithic body (single block) forming the stator support and cooling body 9.

The step of firmly coupling the tubular casings 13 with the annular plates 11 preferably comprises the step of firmly fastening the tubular casings 13 with the annular plates 11. The fastening may preferably be done via a glue/adhesive material, or with a LASER system or the like.

The method comprising the step of preparing the frame 7 and housing the stator support and cooling body 9 in the internal annular seat of the frame 7.

The method comprising the step of producing hermetic seals between the stator support and cooling body 9, the inner face of the wall 7a and the external perimeter of the central annular plate 7 so as to form one or more cooling circuits V with a hermetic seal and hydraulically connecting the latter with the external hydraulic connectors VI. The method also involves the step of inserting the stator elements 8 in the respective stator seats 10 of the stator support and cooling body 9 and coupling the flanges 7b to the wall 7a and to the annular plate 7c. It remains understood that the coupling between the tubular casings 13 and the annular plates 11 is carried out so as to ensure the hermetic seal of the internal channels VII for circulating the cooling fluid of the cooling circuits V.

The assembled structure of the stator support and cooling body described above, which involves the use of assembled tubular casings with the flat plates, makes it possible to obtain at least the following advantages.

In the first place, the combined use of the tubular casings and the annular plates with materials that have different thermal conductivity, in particular, high for the tubular casings and average for the annular plates, makes it possible to reduce the production costs of the stator assembly, ensuring, at the same time, an effective stator cooling.

In second place, the assembly of the tubular casings and the annular plates produced in the way described above makes it possible to flexibly, simply and, thus, cost-effectively produce one or more cooling circuits inside the support and cooling body with multiple circuit configurations. In other words, the structure described above ensures greater construction flexibility that makes it possible to configure, as desired, the path and/or direction that the cooling fluid follows inside the cooling and support body.

Finally, it is clear that the electric machine and method described above may be altered, or variations may be produced thereof, without, as a result, departing from the scope of this invention.

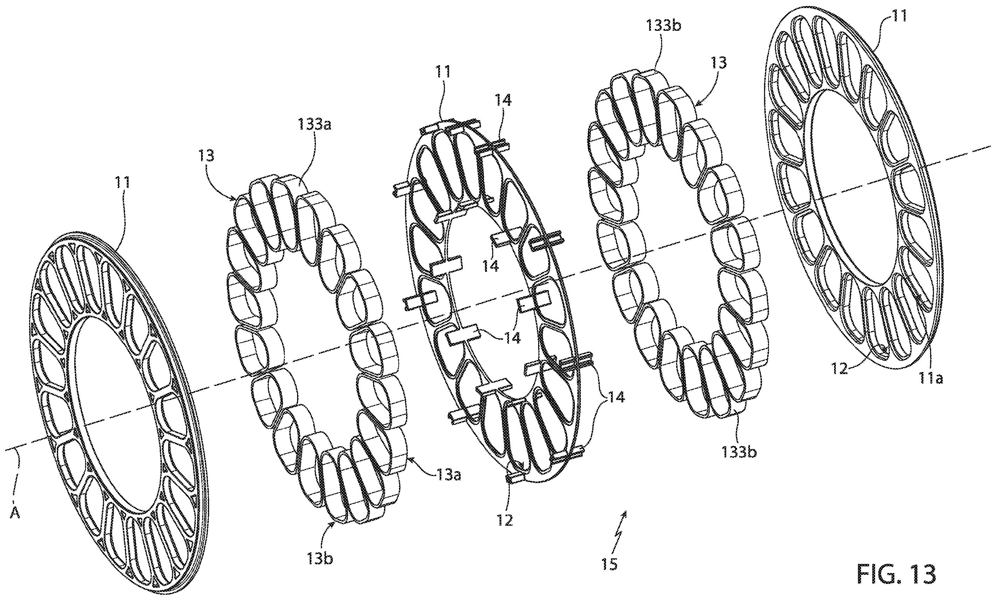

The embodiment shown in Figure 13 relates to a stator support and cooling body 15 of the stator assembly 2 of an axial flux electric machine 1, which is similar to the stator support and cooling body 9, and whose component parts will be distinguished, where possible, with the same reference numbers that distinguish corresponding parts of the connection system 1.

The stator support and cooling body 15 differs from the stator support and cooling body 9 due to the fact that each tubular casing 13 is axially divided into two portions 133a and 133b, each of which is interposed between the third, central annular plate 11 and a side annular plate 11 (second and first annular plate 11) and is firmly coupled to the same based on the method described above.

## Claims

1. A stator assembly (2) comprising a plurality of stator elements (8) and a stator support and cooling body (9) provided with a plurality of stator seats (10) which are arranged angularly spaced apart from each other around a reference axis (A) and house respective stator elements (8), wherein said stator support and cooling body (9) comprises:
a plurality of substantially planar annular plates (11) which are arranged coaxial to said reference axis (A), and lie on planes orthogonal to the axis (A), spaced apart from each other; the annular plates (11) are made by a first electrically insulating and thermally conductive material and have a plurality of through openings (12) which are arranged circumferentially around said reference axis (A) according to angular spaces corresponding to respective angular spaces of said stator seats (10),
a plurality of tubular casings (13) which are interposed between said annular plates (11) in a circumferential manner around said reference axis (A) according to angular spaces corresponding to respective angular spaces of said stator seats (10) and in positions facing the, and communicating with, said through openings (12),
said tubular casings (13) have internal annular surfaces forming said stator seats (10) and are made of a second electrically insulating and thermally conductive material having a thermal conductivity (λ2) which is greater than the thermal conductivity (λ1) of said first material.

2. A stator assembly according to claim 1, wherein said tubular casings (13) have external annular surfaces opposite to said internal annular surfaces, which delimit with said annular plates (11), stator cooling channels (VII) which extend inside said stator support and cooling body (9) and are configured to be crossed by a cooling fluid which cools the stator elements (8) housed in said stator seats (10).

3. A stator assembly according to any one of the foregoing claims, wherein said second material is based on one or more ceramic materials.

4. A stator assembly according to any one of the foregoing claims, wherein the second material is optionally based on: aluminium nitride, alumina, boron nitride.

5. A stator assembly according to any one of the foregoing claims, wherein said tubular casings (13) and said annular plates (11) are mutually stably coupled by means of one or more adhesive materials based on ceramic materials.

6. A stator assembly according to any one of the foregoing claims, comprising at least:
a first annular plate (11) forming a first side of the stator support and cooling body (9),
a second annular plate (11) forming a second side of the stator support and cooling body (9) axially opposite the first side along the axis (A) and
a third annular plate which is arranged centrally between the first and second annular plates (11).

7. A stator assembly according to claim 6, wherein
the third annular plate forms a central internal dividing wall which delimits with said first annular plate (11) and said tubular casings (13), first stator cooling channels (VII) of a first cooling circuit (V),
said third annular plate (11) further delimits with said second annular plate (11) and said tubular casings (13), second stator cooling channels of a second cooling circuit (V) hydraulically separated and distinct from the first cooling circuit (V).

8. A stator assembly according to claim 7, wherein the direction of circulation of the coolant fluid through the first stator cooling channels of the first cooling circuit (V) about the axis (A), is opposite to the direction of circulation of the coolant fluid through said second stator cooling channels of the second cooling circuit (V) around the axis (A) itself.

9. A stator assembly according to claim 8, wherein the tubular casings (13) are inserted in the respective through openings (12) of the third annular plate (11) that supports them at corresponding, axially central, annular portions (13a), and have annular edges (13b) on the axially opposite terminal ends that are inserted at least partially in corresponding self-centring, circular indentations (11a) that are formed on the internal walls (11b) of the second and third annular plate (11) along perimeter edges of the through openings (12).

10. A stator assembly according to any of foregoing claims, wherein the tubular casings (13) and the annular plates (11) are rigidly coupled to each other so as to form a single body.

11. A stator assembly according to any of the foregoing claims wherein said first material is a polymer.

12. A stator assembly according to any of the foregoing claims wherein the annular plates (11) are provided with partitions (14) along the external and internal perimeter edges that are arranged transverse to the support plane of the corresponding annular plate (11) and are designed to block the passage of a cooling fluid along an internal channel (VII) in the circumferential direction so as to deviate it along a radial section.

13. A stator assembly according to any of the foregoing claims, wherein each tubular casing (13) is axially divided into two portions (133a) (133b) interposed between the third annular plate (11) and planar annular plates (11) and is firmly coupled to the same.

14. A method for manufacturing a stator assembly (2) for an axial flux electric machine (1),
wherein the axial flux electric machine is provided with a first disc-shaped rotor (4) which is arranged adjacent to a first side of said stator assembly (2), and/or
a second disc-shaped rotor (4) which is arranged adjacent to a second side of said stator assembly (2), axially opposite the said first side,
wherein the stator group (2) comprises a stator support and cooling body (9) which comprises a plurality of stator seats (10) which are arranged angularly spaced from each other around a reference axis (A) and house respective stator elements (8),
said method comprising the steps of
providing a plurality of substantially planar annular plates (11) which are made of a first electrically insulating and thermally conductive material and each having a plurality of through openings (12), which are arranged circumferentially around an axis corresponding to said reference axis (A) according to angular spaces corresponding to respective angular spaces of said stator seats (10);
providing a plurality of tubular casings (13) which are made of a second electrically insulating and thermally conductive material having a thermal conductivity greater than the thermal conductivity of said first material and have internal annular surfaces shaped according to said stator seats (10),
firmly coupling said tubular casings (13) with said annular plates (11) so as to obtain said monolithic support and stator cooling body.

15. An axial flux electric machine (1) comprising a stator assembly (2) according to any of the foregoing claims from 1 to 13.

## Patentansprüche

1. Statorbaugruppe (2), umfassend eine Vielzahl von Statorelementen (8) und einen Statorträger- und Kühlkörper (9), der mit einer Vielzahl von Statorsitzen (10) versehen ist, die in einem Winkelabstand zueinander um eine Referenzachse (A) angeordnet sind und jeweilige Statorelemente (8) aufnehmen, wobei der Statorträger- und Kühlkörper (9) Folgendes umfasst:
eine Vielzahl von im Wesentlichen ebenen ringförmigen Platten (11), die koaxial zur Referenzachse (A) angeordnet sind und in zueinander beabstandeten Ebenen orthogonal zur Achse (A) liegen; die ringförmigen Platten (11) aus einem ersten elektrisch isolierenden und wärmeleitenden Material bestehen und eine Vielzahl von Durchgangsöffnungen (12) aufweisen, die in Umfangsrichtung um die Referenzachse (A) herum gemäß Winkelabständen angeordnet sind, die jeweiligen Winkelabständen der Statorsitze (10) entsprechen,
eine Vielzahl von rohrförmigen Gehäusen (13), die zwischen den ringförmigen Platten (11) in Umfangsrichtung um die Referenzachse (A) herum gemäß Winkelabständen, die jeweiligen Winkelabständen der Statorsitze (10) entsprechen, und in Positionen, die den Durchgangsöffnungen (12) zugewandt sind und mit diesen kommunizieren, angeordnet sind,
wobei die rohrförmigen Gehäuse (13) innere ringförmige Oberflächen aufweisen, die die Statorsitze (10) bilden, und aus einem zweiten elektrisch isolierenden und wärmeleitenden Material bestehen, dessen Wärmeleitfähigkeit (A2) größer ist als die Wärmeleitfähigkeit (A1) des ersten Materials.

2. Statorbaugruppe nach Anspruch 1, wobei die rohrförmigen Gehäuse (13) äußere ringförmige Oberflächen aufweisen, die den inneren ringförmigen Oberflächen gegenüberliegen, die mit den ringförmigen Platten (11) Statorkühlkanäle (VII) begrenzen, die sich innerhalb des Statorträger- und Kühlkörpers (9) erstrecken und dazu ausgelegt sind, von einem Kühlfluid durchströmt zu werden, das die in den Statorsitzen (10) untergebrachten Statorelemente (8) kühlt.

3. Statorbaugruppe nach einem der vorhergehenden Ansprüche, wobei das zweite Material auf einem oder mehreren keramischen Materialien basiert.

4. Statorbaugruppe nach einem der vorhergehenden Ansprüche, wobei das zweite Material optional auf folgenden Stoffen basiert:
Aluminiumnitrid, Aluminiumoxid, Bornitrid.

5. Statorbaugruppe nach einem der vorhergehenden Ansprüche, wobei die rohrförmigen Gehäuse (13) und die ringförmigen Platten (11) mittels eines oder mehrerer Klebematerialien auf Basis von Keramikmaterialien stabil miteinander gekoppelt sind.

6. Statorbaugruppe nach einem der vorhergehenden Ansprüche, umfassend mindestens:
eine erste ringförmige Platte (11), die eine erste Seite des Statorträger- und Kühlkörpers (9) bildet,
eine zweite ringförmige Platte (11), die eine zweite Seite des Statorträger- und Kühlkörpers (9) bildet, die der ersten Seite entlang der Achse (A) axial gegenüberliegt, und
eine dritte ringförmige Platte, die mittig zwischen der ersten und der zweiten ringförmigen Platte (11) angeordnet ist.

7. Statorbaugruppe nach Anspruch 6, wobei
die dritte ringförmige Platte eine mittige innere Trennwand bildet, die mit der ersten ringförmigen Platte (11) und den rohrförmigen Gehäusen (13) erste Statorkühlkanäle (VII) eines ersten Kühlkreislaufs (V) begrenzt,
die dritte ringförmige Platte (11) ferner mit der zweiten ringförmigen Platte (11) und den rohrförmigen Gehäusen (13) zweite Statorkühlkanäle eines zweiten Kühlkreislaufs (V) begrenzt, der hydraulisch vom ersten Kühlkreislauf (V) getrennt und von diesem unterschieden ist.

8. Statorbaugruppe nach Anspruch 7, wobei die Strömungsrichtung des Kühlfluids durch die ersten Statorkühlkanäle des ersten Kühlkreislaufs (V) um die Achse (A) entgegengesetzt zur Strömungsrichtung des Kühlfluids durch die zweiten Statorkühlkanäle des zweiten Kühlkreislaufs (V) um die Achse (A) selbst ist.

9. Statorbaugruppe nach Anspruch 8, wobei die rohrförmigen Gehäuse (13) in die jeweiligen Durchgangsöffnungen (12) der dritten ringförmigen Platte (11) eingesetzt sind, die sie an entsprechenden, axial mittigen, ringförmigen Abschnitten (13a) trägt und ringförmige Kanten (13b) an den axial gegenüberliegenden Abschlußenden aufweisen, die zumindest teilweise in entsprechende selbstzentrierende, kreisförmige Vertiefungen (11a) eingesetzt sind, die an den Innenwänden (11b) der zweiten und dritten ringförmigen Platte (11) entlang der Umfangskanten der Durchgangsöffnungen (12) gebildet sind.

10. Statorbaugruppe nach einem der vorhergehenden Ansprüche, wobei die rohrförmigen Gehäuse (13) und die ringförmigen Platten (11) starr miteinander gekoppelt sind, um einen einzigen Körper zu bilden.

11. Statorbaugruppe nach einem der vorhergehenden Ansprüche, wobei das erste Material ein Polymer ist.

12. Statorbaugruppe nach einem der vorhergehenden Ansprüche, wobei die ringförmigen Platten (11) entlang der äußeren und inneren Umfangskanten mit Trennwänden (14) versehen sind, die quer zur Auflageebene der entsprechenden ringförmigen Platte (11) angeordnet sind und dazu ausgebildet sind, den Durchfluss eines Kühlfluids entlang eines inneren Kanals (VII) in Umfangsrichtung zu blockieren, um es entlang eines radialen Abschnitts umzuleiten.

13. Statorbaugruppe nach einem der vorhergehenden Ansprüche, wobei jedes rohrförmige Gehäuse (13) axial in zwei Abschnitte (133a) (133b) unterteilt ist, die zwischen der dritten ringförmigen Platte (11) und den ebenen ringförmigen Platten (11) angeordnet und fest mit diesen gekoppelt sind.

14. Verfahren zur Herstellung einer Statorbaugruppe (2) für eine elektrische Axialflussmaschine (1),
wobei die elektrische Axialflussmaschine mit einem ersten scheibenförmigen Rotor (4) versehen ist, der an eine erste Seite der Statorbaugruppe (2) angrenzend angeordnet ist, und/oder
einen zweiten scheibenförmigen Rotor (4), der an eine zweite Seite der Statorbaugruppe (2) angrenzend angeordnet ist, die der ersten Seite axial gegenüberliegt,
wobei die Statorgruppe (2) einen Statorträger- und Kühlkörper (9) umfasst, der eine Vielzahl von Statorsitzen (10) umfasst, die in einem Winkelabstand zueinander um eine Referenzachse (A) angeordnet sind und jeweilige Statorelemente (8) aufnehmen,
wobei das Verfahren die folgenden Schritte umfasst:
Bereitstellen einer Vielzahl von im Wesentlichen ebenen ringförmigen Platten (11), die aus einem ersten elektrisch isolierenden und wärmeleitenden Material bestehen und jeweils eine Vielzahl von Durchgangsöffnungen (12) aufweisen, die in Umfangsrichtung um eine der Referenzachse (A) entsprechende Achse herum gemäß Winkelabständen angeordnet sind, die jeweiligen Winkelabständen der Statorsitze (10) entsprechen;
Bereitstellen einer Vielzahl von rohrförmigen Gehäusen (13), die aus einem zweiten elektrisch isolierenden und wärmeleitenden Material bestehen, dessen Wärmeleitfähigkeit größer ist als die Wärmeleitfähigkeit des ersten Materials, und innere ringförmige Oberflächen aufweisen, die gemäß den Statorsitzen (10) ausgeformt sind,
festes Koppeln der rohrförmigen Gehäuse (13) mit den ringförmigen Platten (11), um den monolithischen Träger- und Statorkühlkörper zu erhalten.

15. Elektrische Axialflussmaschine (1), die eine Statorbaugruppe (2) nach einem der vorhergehenden Ansprüche 1 bis 13 umfasst.

## Revendications

1. Ensemble de stator (2) comprenant une pluralité d'éléments de stator (8) et un corps de support et de refroidissement de stator (9) muni d'une pluralité de sièges de stator (10) qui sont disposés espacés angulairement les uns des autres autour d'un axe de référence (A) et qui logent des éléments de stator (8) respectifs, dans lequel ledit corps de support et de refroidissement de stator (9) comprend :
une pluralité de plaques annulaires (11) sensiblement planes, qui sont disposées de manière coaxiale audit axe de référence (A) et se trouvent sur des plans orthogonaux à l'axe (A), espacées les unes des autres ; les plaques annulaires (11) sont réalisées dans un premier matériau électriquement isolant et thermiquement conducteur et comportent une pluralité d'ouvertures traversantes (12) qui sont disposées de manière circonférentielle autour dudit axe de référence (A) selon des espacements angulaires correspondant à des espacements angulaires respectifs desdits sièges de stator (10),
une pluralité d'enveloppes tubulaires (13) qui sont intercalées entre lesdites plaques annulaires (11) de manière circonférentielle autour dudit axe de référence (A), selon des espacements angulaires correspondant à des espacements angulaires respectifs desdits sièges de stator (10), et dans des positions faisant face auxdites ouvertures traversantes (12) et communiquant avec celles-ci ;
lesdits enveloppes tubulaires (13) présentent des surfaces annulaires internes formant lesdits sièges de stator (10) et sont réalisées dans un deuxième matériau électriquement isolant et thermiquement conducteur ayant une conductivité thermique (A2) qui est supérieure à la conductivité thermique (A1) dudit premier matériau.

2. Ensemble de stator selon la revendication 1, dans lequel lesdites enveloppes tubulaires (13) présentent des surfaces annulaires externes opposées auxdites surfaces annulaires internes, qui délimitent avec lesdites plaques annulaires (11), des canaux de refroidissement de stator (VII) qui s'étendent à l'intérieur dudit corps de support et de refroidissement de stator (9) et sont configurés pour être traversés par un fluide de refroidissement qui refroidit les éléments de stator (8) logés dans lesdits sièges de stator (10).

3. Ensemble de stator selon l'une quelconque des revendications précédentes, dans lequel ledit deuxième matériau est à base d'un ou plusieurs matériaux céramiques.

4. Ensemble de stator selon l'une quelconque des revendications précédentes, dans lequel le deuxième matériau est éventuellement à base de : nitrure d'aluminium, alumine, nitrure de bore.

5. Ensemble de stator selon l'une quelconque des revendications précédentes, dans lequel lesdits enveloppes tubulaires (13) et lesdites plaques annulaires (11) sont couplées de manière stable les unes aux autres au moyen d'un ou plusieurs matériaux adhésifs à base de matériaux céramiques.

6. Ensemble de stator selon l'une quelconque des revendications précédentes, comprenant au moins :
une première plaque annulaire (11) formant un premier côté du corps de support et de refroidissement de stator (9),
une deuxième plaque annulaire (11) formant un deuxième côté du corps de support et de refroidissement de stator (9), opposé axialement au premier côté suivant l'axe (A), et
une troisième plaque annulaire qui est disposée au centre entre les première et deuxième plaques annulaires (11).

7. Ensemble de stator selon la revendication 6, dans lequel
la troisième plaque annulaire forme une paroi de séparation interne centrale qui délimite, avec ladite première plaque annulaire (11) et lesdites enveloppes tubulaires (13), des premiers canaux de refroidissement de stator (VII) d'un premier circuit de refroidissement (V),
ladite troisième plaque annulaire (11) délimite en outre, avec ladite deuxième plaque annulaire (11) et lesdites enveloppes tubulaires (13), des deuxièmes canaux de refroidissement de stator d'un deuxième circuit de refroidissement (V) séparé hydrauliquement et distinct du premier circuit de refroidissement (V).

8. Ensemble de stator selon la revendication 7, dans lequel le sens de circulation du fluide de refroidissement à travers les premiers canaux de refroidissement du stator du premier circuit de refroidissement (V) autour de l'axe (A) est opposé au sens de circulation du fluide de refroidissement à travers lesdits seconds canaux de refroidissement de stator du second circuit de refroidissement (V) autour de l'axe (A) lui-même.

9. Ensemble de stator selon la revendication 8, dans lequel les enveloppes tubulaires (13) sont insérées dans les ouvertures traversantes (12) respectives de la troisième plaque annulaire (11) qui les supporte au niveau de parties annulaires axialement centrales (13a) correspondantes, et comportent des bords annulaires (13b) aux extrémités axiales opposées qui sont insérés au moins partiellement dans des renfoncements circulaires à auto-centrage (11a) correspondantes qui sont formées sur les parois internes (11b) des deuxième et troisième plaques annulaires (11) le long de bords périphériques des ouvertures traversantes (12).

10. Ensemble de stator selon l'une quelconque des revendications précédentes, dans lequel les enveloppes tubulaires (13) et les plaques annulaires (11) sont couplées rigidement les unes aux autres de manière à former un corps unique.

11. Ensemble de stator selon l'une quelconque des revendications précédentes, dans lequel ledit premier matériau est un polymère.

12. Ensemble de stator selon l'une quelconque des revendications précédentes, dans lequel les plaques annulaires (11) sont pourvues de cloisons (14) le long des bords périphériques externes et internes, qui sont disposées transversalement au plan de support de la plaque annulaire (11) correspondante et sont conçues pour bloquer le passage d'un fluide de refroidissement le long d'un canal interne (VII) dans la direction circonférentielle, de manière à le dévier le long d'une section radiale.

13. Ensemble de stator selon l'une quelconque des revendications précédentes, dans lequel chaque enveloppe tubulaire (13) est divisée axialement en deux parties (133a) (133b) intercalées entre la troisième plaque annulaire (11) et les plaques annulaires planes (11) et est solidement couplée à celles-ci.

14. Procédé de fabrication d'un ensemble de stator (2) pour une machine électrique à flux axial (1),
dans lequel la machine électrique à flux axial est pourvue d'un premier rotor en forme de disque (4) qui est disposé à proximité d'un premier côté dudit ensemble de stator (2), et/ou
d'un deuxième rotor en forme de disque (4) qui est disposé à proximité d'un deuxième côté dudit ensemble de stator (2), opposé axialement audit premier côté,
dans lequel l'ensemble de stator (2) comprend un corps de support et de refroidissement de stator (9) qui comporte une pluralité de sièges de stator (10) qui sont espacés angulairement les uns des autres autour d'un axe de référence (A) et logeant des éléments de stator (8) respectifs,
ledit procédé comprenant les étapes suivantes :
la fourniture d'une pluralité de plaques annulaires sensiblement planes (11) qui sont réalisées dans un premier matériau électriquement isolant et thermiquement conducteur, chacune présentant une pluralité d'ouvertures traversantes (12) qui sont disposées de manière circonférentielle autour d'un axe correspondant audit axe de référence (A), selon des espacements angulaires correspondant à des espacements angulaires respectifs desdits sièges de stator (10) ;
la fourniture d'une pluralité d'enveloppes tubulaires (13) qui sont réalisées dans un deuxième matériau électriquement isolant et thermiquement conducteur présentant une conductivité thermique supérieure à la conductivité thermique dudit premier matériau et qui comportent des surfaces annulaires internes formées selon lesdits sièges de stator (10),
l'accouplement solide desdites enveloppes tubulaires (13) auxdites plaques annulaires (11) de manière à obtenir ledit corps monolithique de support et de refroidissement de stator.

15. Machine électrique à flux axial (1) comprenant un ensemble de stator (2) selon l'une quelconque des revendications précédentes 1 à 13.
